# EUROPEAN PATENT APPLICATION

(11) **EP 3 531 708 A1**
(43) Date of publication of application: **28.08.2019**
(21) Application number: 18157797.4
(22) Date of filing: 21.02.2018
(51) Int. Cl.: H04N 21/81

(54) **METHOD FOR CREATING AND MANAGING A FAVOURITES LIST**

(71) Applicant: Vestel Elektronik Sanayi ve Ticaret A.S., 45030 Manisa (TR)
(72) Inventor: GÖKSEL, Onur, 45030 Manisa (TR); ARDUÇ, Mücahit, 45030 Manisa (TR); SEVINÇ, Hasbi, 45030 Manisa (TR); YÜREK, Engin, 45030 Manisa (TR)
(74) Representative: Beck Greener LLP

(57) **Abstract**

The invention provides a system for managing a favourites list of a user, the system comprising: a favourites list module configured to process the stream of video data for the advertisement to extract meta-data, and, in response to input from the user, to store the meta-data and add an item corresponding to the advertisement to the favourites list. The invention also provides a method for managing a favourites list of a user.

## Description

The present invention relates to a system for managing a favourites list and to a method for managing a favourites list.

Video online or television advertising affords a wealth of opportunity for businesses to increase awareness of their products. This is particularly true in recent years with the proliferation of applications such as Facebook^{RTM}, Twitter^{RTM}, and alternative social networking sites, which are often available on mobile phones and other portable devices via mobile applications. Users are also now able to watch video content on these same devices, often linked to via networking sites, so that advertising as part of a video stream either online or on a user's TV at home provides increasing revenue for companies. TV platforms now allow access to hundreds of different channels, most of which play advertisments between programmes and during intervals within a programme.

Although adverts can be targeted to the audience of a television show or associated with particular web pages to which certain individuals are likely to navigate, user interaction with adverts played in commercial breaks as part of a television programme is generally not possible and these are often muted or ignored by the viewer.

US-A-2014/0282742 describes a system which allows a user to request electronic programming content from one of a choice of carriers whilst viewing an advert for that content over the internet for that same content on their mobile or computing device. Selection of a user interface element (a button, for example) allows the user to request video content to their set top box or schedule recording of the content by the set top box at a time when the programme of interest is scheduled to be transmitted by a provider.

US-A-2010/0235788 relates to methods for allowing users to share items from personal favourites lists over the internet. Items in the list are associated with an interface element which allows another user to add items and related content to their own favourites list in a fairly straightforward manner. US-A-2015/0026719 describes a method for targeted advertising wherein the primary user of a device is allocated to a "group" which can be compared to a target group in order to tailor advertisements shown on an interactive programme guide to the particular user of the device.

According to a first aspect of the present invention, there is provided a system for managing a favourites list of a user, the system comprising: a favourites list module configured to process a stream of video data for an advertisement to extract meta-data, and, in response to input from the user, to store the meta-data in memory and add an item corresponding to the advertisement to the favourites list.

The system provides a way in which a user can interact with an advertisement in real time and provides broadcasters and advertisers with the ability to communicate additional information about their products specifically to users who have indicated their interest. This also means that information can be tailored to the user either based on their credentials or by prompting them to indicate which information, or which type of information, they require.

In embodiments, the meta-data is transmitted by a broadcaster to the module, as part of the stream of video data, together with subtitle or closed captioning information. This allows a broadcaster control of what information is provided to a user who expresses an interest in the advertised material. Processing the meta-data as part of the video stream is economical and ensures that the required information is available at a time when the advert is showing. Broadcasters can also adapt this meta-data in response to feedback from users.

In embodiments, transmitting together with subtitle or closed captioning information comprises including the meta-data in the same file as the subtitle or closed caption information.This provides a simple way for the meta-data to be added to and read from the video stream. Equipment is already present with the capability to process subtitle data, which may be used in the present system. The same processing hardware can be used to read subtitle files and as part of the favourites list module for processing the meta-data, or separate hardware may be included for processing of the meta-data.

In embodiments, the meta-data is burned into a hidden line of an image forming part of the broadcast stream of video data. In certain video stream formats (such as those generally used by broadcasters to transmit video streams for TV) subtitle information is transmitted in this way. The meta-data is therefore included in the video stream in the same manner as the subtitle data.

In embodiments, the video data is stored on the memory along with the meta-data in response to the user input. This allows a user to replay the advert by selecting a link or icon associated with the item on their favourites list at a later time if desired.

In embodiments, the system comprises a display device and the favourites list module processes the video data at the same time as the advert is displayed on the display device. The display device may be a television set, and the favourites list may be accessed and then viewed using a menu also displayed on the television set.

In embodiments, in response to processing the meta-data, the display device is configured to display an indication which informs the user of how to provide the input. The indication may represent an interactive button on a screen or an instruction directing the user to press a button on a remote control or keyboard. If a particular advert catches the user's attention, then they are made aware of how to add this advert to their list at a time when they are most likely to wish to do so.

In embodiments, the display device comprises a touch screen, the indication comprises a virtual button on a touch screen, and providing the input comprises touching the button. This type of indication will interrupt viewing of the advert only minimally.

In embodiments, the display device is a television set and the favourites list module is included as software running on a set top box coupled to the television set.

In embodiments, the meta-data includes one or more of the name of the television channel showing the advert, the type of television channel showing the advert, the time and date of broadcast, start and end time of broadcast, advert duration, category of product, description of advert, and type of advert. The information may be shown as text information on the favourites list or accessed as text information from the favourites list.

According to a second aspect of the present invention, there is provided a method for managing a favourites list, the method comprising: processing, by a favourites list module, a video stream of data for an advertisement to extract meta-data; and in response to user input, storing, by the favourites list module, the meta-data in memory and adding an item corresponding to the advertisement to a favourites list of the user.

In embodiments, the favourites list module processes the stream to extract meta-data in response to the user input.

In embodiments, the meta-data is transmitted together with subtitle or closed captioning information as part of a broadcast stream of video data.

Embodiments of the present invention will now be described in detail with reference to the accompanying drawings, in which:
Figure 1 shows an example system for managing a favourites list module;
Figure 2 shows an example method for managing a favourites list module;

The system described below allows a user to create a personalised "favourites list" from which information related to selected adverts can be accessed. This information may be included by a broadcaster as part of the broadcast data stream for the advert.

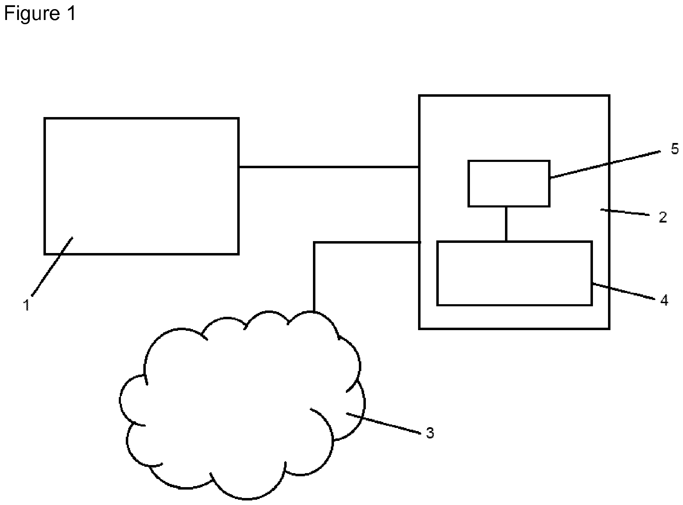

An example system is shown in Figure 1. The system includes a television set or other display device 1, which may be coupled to a set top box 2 for converting analogue or digital signals into video and audio content for display on the device. The set top box or the display device itself can be connected to the internet 3 for communication with internet servers via which content may be transmitted to the device 1 and/or the set top box 2. Alternatively or additionally, content may be transmitted to the device via satellite from a broadcaster. Selection of the advert by the user may involve pressing a particular button or sequence of buttons on a remote control or on the display device itself. The display screen may be touch sensitive, so that the user can cause the advert to be added to their list simply by touching an indicated area of the screen.

The set top box 2 includes a favourites list module 4 implemented in software and coupled to memory 5 on which information relating to a user's list can be stored. Module 5 may also be configured to process information and instructions sent by the broadcaster relating to an advert. As a result of the processing, the module may be configured to cause icons or instructions to be displayed on the display device along with the advert. These instructions may allow the user to add it as an item to their list. The module also allows the user to access a menu from which they can select saved items to view the advert again or request information from the memory or from an external source (a URL may be included as part of the advert meta-data, for example, which may link to a website with additional information about the product including information on costs and vendors).

In embodiments, information about the advert is sent as meta-data as part of the broadcast data stream. The favourites list module 5 may not require information from the broadcast stream in order to cause an indication to appear instructing the user how to add the advert to their favourites list. Instead it may simply cause the same instructions or icon to appear at the start of each advert automatically. Information regarding how or where to place the instructions is not in this case sent with the broadcast stream but is written in to the software accessed when the module is run. Meta-data relating to the advert may only be processed in the event that the user selects to add the particular advert to their favourites list, or may be processed in any event and saved in memory, possibly temporarily.

An advert is shown on a user's display device as part of a programme or as a result of accessing a particular website. A pop-up is shown on the screen at the same time as the advert which indicates to the user which actions to take in order to add the advert to their favourites list, as described above. The indication may instruct the user how to interact with an interface element on the screen or to press a particular button or sequence of buttons on a remote control in order to select the advert to be added to their list. For example, a notification may appear, during all or part of the advert, which instructs the user with a prompt such as "please click the green key to add this advertisement to your favourites list". If the user completes the required action, the information relating to the advert will be extracted and linked with the entry on the list in order that this information can be quickly accessed from a menu representing the favourites list by clicking on the related entry. A remote control specifically for communication with the favourites list module may be provided, or an existing remote control, touchpad, or keyboard may provide the required function.

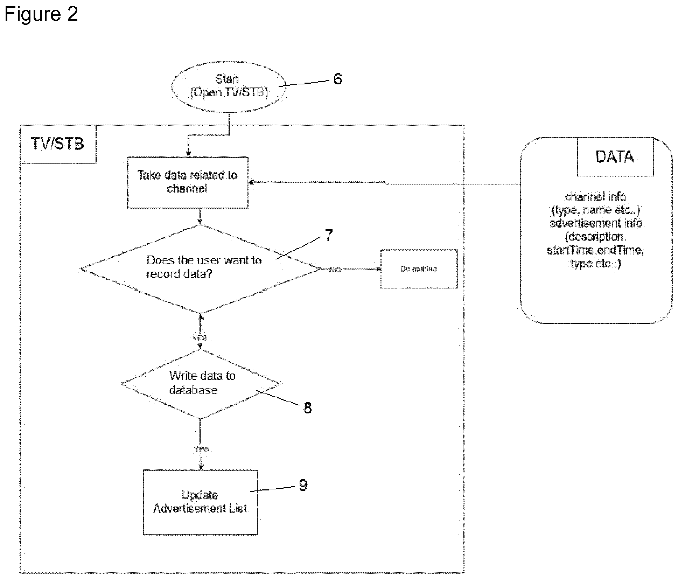

Figure 2 illustrates a method for using the present system. The set top box or TV is switched on at step 6 and data which is being broadcast on the channel to which the device is tuned is processed by the STB or TV and passed to the display device for viewing. The display device may be a TV screen, PC, laptop, phone, or tablet. When an advert is shown, processing of the data includes processing of the additional information added by the broadcaster and required by the present system. If the user indicates that they would like to add the advert to their list at point 7, the additional data or meta-data associated with the advert is stored in the memory coupled to the favourites list module at point 8. The advert may also be recorded in memory so that a user can view it again if and when they like. The user's favourites list is updated at point 9 to include a link to the information and recorded video data, which can be accessed through a menu as described above.

Information or meta-data linked to or included in the list entry may comprise one or more of channel information (name, type), time and date of broadcast, start and end time of broadcast, advert duration, category of product, description of advert, and type of advert, among others.

Advert or product-type information can be used to allow a user to select a type of advert. During viewing, all adverts of that type may be added to the favourites list automatically until a user deselects this option. Specifically, favourites list module determines advert type when the advert meta-data is processed. The module will then automatically record the advert and related information to memory, and update the favourites list to reflect the new entry, if it is determined that the advert is of the selected type ("adverts for cars", for example). The system may also learn the preferences of a user over time and automatically add adverts to the favourites list which relate to products in which the system has determined that the user is likely to be interested. Once the user has selected a threshold number of adverts for a particular product type to his or her list, for example, the system may begin to save adverts of this type until the user instructs otherwise.

The broadcaster can also choose to include information directed to a specific group of users. The user can be encouraged to provide information to the favourites list module (name, age, gender, address, etc) which can be used to tailor the information recorded when an advert is selected by a particular user. If the user is younger, for example, a URL may be provided to link to a review on Facebook^{RTM} or Twitter^{RTM}. An older user may instead be provided with a link to a different website providing reviews or cost estimates. A user may also be able to select particular categories or types of meta-data which they would like to be added to their list on selection of an advert. Only the requested information may then be recorded (or processed and recorded) by the favourites list module when an advert is selected.

A screen showing the favourites list can be accessed through a main menu, for example by selecting a particular icon or entry. The menu and/or the list itself may be displayed on the whole screen or on a part of the screen and may be displayed in a different region to the instructions about how to select an advertisement to form part of the favourites list. The favourites list may be displayed in a different region of the screen to the menu and may represent an expansion of the menu when the user selects to view the list. An image or text associated with each item, which may be a single frame taken from the video stream for the advert, allows the user to identify the advert and the product advertised quickly. If the icon related to the advert is selected then the user can be given the option to watch the advert again, or to access additional information. The entry for the item may also include an interactive element which, when clicked, plays the associated advert again. Entries may also provide textual information next to or intsead of the icon. This information may represent all of or a selected portion of the meta-data recorded by the favourites list module. The item may need to be selected in order to view all of the meta-data available. Different users may be able to log-in when the display device or set top box is powered on, at which point they can access their own list. Each user's list may not be accessible by other users of the system.

Information about the advert can be obtained through the broadcast video stream as described in more detail below, or via the internet (Gracenote^{RTM}, the cloud, etc). If information is accessed via the internet, the broadcast stream may still include a link to this information and the information may be accessed by the favourites list module only if the user selects the advert for addition to their list. Gracenote^{RTM} provides video meta-data which can easily be appended with additional information for use by the favourites list module of the present system.

Terrestrial television signals are broadcast according to certain encoding or formatting standards, which may be different depending on the country in which the content is to be viewed. The transmitted signal may include information regarding frame rate and colour/brightness of pixels within a particular frame and audio information. Signals also include information used for teletext, closed captioning, or for displaying subtitles. It is necessary when displaying subtitles, for example, for the system to be aware of when during a video or frame a particular word should be displayed as well as the desired position of the subtitle on the screen, size, colour etc. This information is broadcast along with the video data itself and may be included in a separate file or may be burned into a hidden line of an image forming a part of the video. If the user is watching a DVD or similar, the information may be included in the subtitle file (which may be a text file to be decoded by the DVD player).

Some systems encode subtitle or closed caption information in the last odd and even lines in the Vertical Broadcast Interval, which is the part of a TV signal which is not visible and is used mainly for calibration of the signal. Information is transmitted in this way in several channels, some of which are used for text and some for captions. Additional information or meta-data used by the present system can be included in the same channels as the subtitles or in different channels. If they are included in the same channel, then some indicator will need to be included in the file to inform the processor when the subtitle information ends and the meta-data for creating a favourites list begins. In response to an indication by the user that they wish to add an advert to their favourites list, this portion of the file may be processed, which may cause certain text or images to appear on the screen (such as to indicate that the advert has been added to the favourites list) in the same manner as the subtitles are caused to appear at a particular time during the video. The meta-data can therefore at least partly represent an extension to the subtitle file which is processed only in response to user input indicating their intention to add the currently playing content to their favourites list.

The present system may use or process meta-data about a particular advert and information required to allow user interaction with the advert which is transmitted to the module together with the information used to display subtitles, or with closed captioning data. This way, the required information is broadcast with the video advert and is under the control of the broadcaster who is able to determine what information is available to a viewer who has indicated that he/she is interested in the advertised product. Processors in set top boxes and TVs are set up to process subtitle data, so that additional processing requirements in order to use the present system will be minimal.

The meta-data may be in the same format as the rest of the subtitle file so that it can be easily processed in the same manner as the rest of the file. The information may, for example, be appended to the end of the file with an indicator at the start to inform the processor that the subtitle information has ended and that the information relating to the advert or favourites list is about to begin.

Embodiments of the present invention have been described with particular reference to the examples illustrated. However, it will be appreciated that variations and modifications may be made to the examples described within the scope of the present invention.

## Claims

1. A system for managing a favourites list of a user, the system comprising:
a favourites list module configured to process a stream of video data for an advertisement to extract meta-data, and, in response to input from the user, to store the meta-data in memory and add an item corresponding to the advertisement to the favourites list.

2. The system of claim 1, wherein the meta-data is transmitted by a broadcaster to the module, as part of the stream of video data, together with subtitle or closed captioning information.

3. The system of claim 2, wherein transmitting together with subtitle or closed captioning information comprises including the meta-data in the same file as the subtitle or closed caption information.

4. The system of claim 2, wherein the meta-data is burned into a hidden line of an image forming part of the broadcast stream of video data.

5. The system of any of claims 1 to 4, wherein the video data is stored on the memory with the meta-data in response to the user input.

6. The system of claims 1 to 5, wherein the system comprises a display device and the favourites list module processes the video data at the same time as the advert is displayed on the display device.

7. The system of any of claims 6, wherein in response to processing the meta-data, the display device is configured to display an indication which informs the user of how to provide the input.

8. The system of claim 7, wherein the display device comprises a touch screen and the indication comprises a virtual button on a touch screen and providing the input comprises touching the button.

9. The system of any of claims 6 to 8, wherein the display device is a television set and the favourites list module is included as software running on a set top box coupled to the television set.

10. The system of any of claims 1 to 9, wherein the meta-data includes one or more of name of television channel, type of television channel, time and date of broadcast, start and end time of broadcast, advert duration, category of product, description of advert, and type of advert.

11. A method for managing a favourites list, the method comprising:
processing, by a favourites list module, a video stream of data for an advertisement to extract meta-data; and
in response to user input, storing, by the favourites list module, the meta-data in memory and adding an item corresponding to the advertisement to a favourites list of the user.

12. The method of claim 11, wherein the favourites list module processes the stream to extract meta-data in response to the user input.

13. The method of any of claims 11 and 12, wherein the meta-data is transmitted together with subtitle or closed captioning information as part of a broadcast stream of video data.
